# EUROPEAN PATENT APPLICATION

(11) **EP 1 378 414 A1**
(43) Date of publication of application: **07.01.2004**
(21) Application number: 03015097.3
(22) Date of filing: 03.07.2003
(51) Int. Cl.: B60T 13/26, B60T 8/26, B60T 17/18

(54) **Braking system for vehicles, in particular lorries**

(30) Priority: 05.07.2002 DE 10230314
(71) Applicant: IVECO MAGIRUS AG, D-89079 Ulm (DE)
(72) Inventor: Neuburger, Hans, 89160 Dornstadt (DE)
(74) Representative: Gervasi, Gemma, Dr.

(57) **Abstract**

A braking system for vehicles, in particular lorries, is provided, having a dual circuit service brake which comprises a front axle brake circuit and a rear axle brake circuit. The rear axle brake circuit (34,36,38,40) is connected to the front axle brake cylinders (18,20) via a branch line (48) in which there is disposed a pressure-limiting valve (50).

## Description

The invention relates to a braking system for vehicles, in particular lorries, having a dual circuit service brake which comprises a front axle brake circuit and a rear axle brake circuit.

The service brakes of lorries are generally compressed air braking systems which, in accordance with current regulations, comprise two separate brake circuits. In general, a front axle brake circuit and a rear axle brake circuit are provided so that in the event of failure of one of the brake circuits the respective other brake circuit is available as a secondary braking system.

Although in the event of failure of the rear axle brake circuit the remaining front axle brake circuit generally develops an adequate braking action, since the front wheels are pressed firmly against the roadway as a result of the engine weight and the forward pitching motion of the vehicle body additionally occurring under braking, and they can transmit the braking forces, the braking action of the rear axle brake circuit is becoming increasingly problematic in the event of failure of the front axle brake circuit. Above all this is caused by the increasingly lighter construction of modern lorries, which results in unladen lorries or semitrailer tractors without a trailer no longer being able to be adequately retarded with the rear axle brake circuit alone, since the contact force of the rear wheels on the roadway surface is not sufficient. Of course, the difficulties are intensified on an uneven or wet roadway or when snow and ice are present.

The invention is based on the object of devising a secondary braking system for braking systems of the above type, which assures the required secondary braking action even when the front axle brake circuit has failed.

To achieve this object a braking system of the above type is characterised in that the rear axle brake circuit is connected to the front axle brake cylinders via a branch line in which there is disposed a pressure-limiting valve.

This means that under secondary braking by means of the rear axle braking system the front wheels are also braked with limited pressure and thus they supplement the braking action of the rear wheels.

It is understood that during this secondary braking operation it is necessary to prevent the brake pressure reaching the front brake cylinders from being lost via the defective front axle brake circuit. Preferably, therefore, two-way valves are provided on the front brake cylinders, which valves have separate inputs for the front axle brake line and the secondary brake line extending from the rear axle brake line according to the invention and which are so designed that they admit the respectively higher pressure and thus block the other input.

With an intact front axle brake circuit these two-way valves allow only the compressed air of the front axle brake circuit to reach the brake cylinders, since the secondary braking pressure which originates from the rear wheels is limited by the pressure-limiting valve to a relatively low value, for example of 1 bar. At this low pressure it is ensured that there is no interference with the anti-lock braking system (ABS) of the front axle brake circuit under normal operation.

A special advantage of the braking system according to the invention is that the driver can brake with the normal brake pedal even under secondary braking operation and does not have to change over to a separate brake-actuating member and thereby lose valuable time.

Preferred examples of an embodiment of the invention will be illustrated in more detail below with reference to the accompanying drawings.

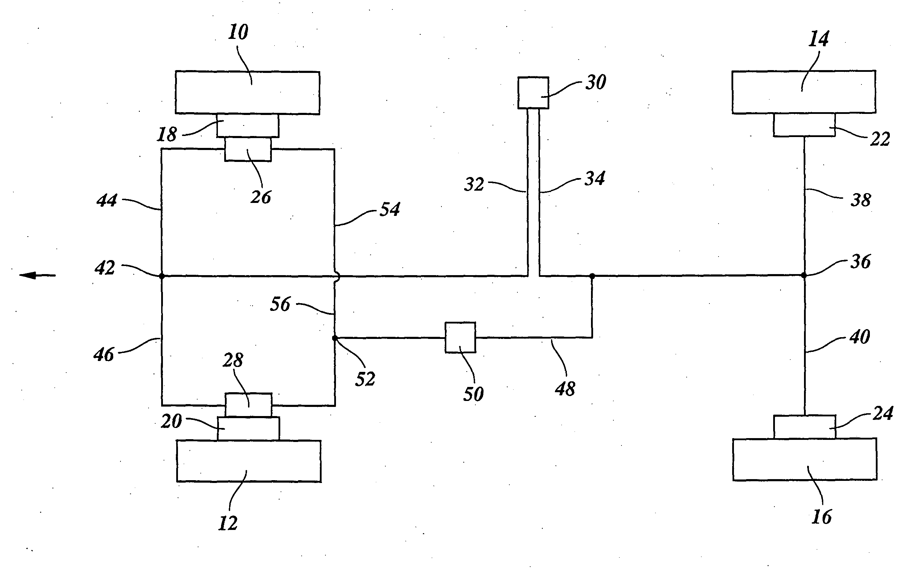

The single Figure is a schematic circuit diagram of the braking system according to the invention.

The accompanying circuit diagram is limited to the elements essential to the invention.

It shows two front wheels 10,12 and two rear wheels 14,16. Schematically indicated brake cylinders 18,20,22,24 are associated with the wheels. Two-way valves 26,28 are connected directly upstream of the brake cylinders 18,20 of the front wheels 10,12. The two-way valves can be integrated directly into the front brake cylinders 18,20.

Two compressed air lines 32,34 extend from a brake actuating device 30 and are connected to two separate brake circuits, namely a brake circuit of the front axle and a brake circuit of the rear axle. The compressed air line 34 for the rear axle brake circuit branches at a distributor 36, from which branch lines 38,40 extend to the rear brake cylinders 22,24.

The compressed air line 32 for the front axle brake circuit branches at a distributor 42, from which extend branch lines 44,46 which extend respectively to an input of the two-way valves 26,28. The compressed air reaches the front brake cylinders 18,20 via the two-way valves 26,28.

To this extent a conventional dual circuit braking system is involved, except for the fact that in a conventional system of this type the two-way valves 26,28 on the front axle can be omitted.

According to the invention, there extends from the compressed air line 34 of the rear axle braking system a branch line 48 which extends via a pressure-limiting valve 50 to a distributor 52. Two branch lines 54,46 extend from the distributor 52 to the respective other inputs of the two-way valves 26,28. The two-way valves 26,28 are so designed that in each case the higher pressure from the branch lines 44,46, on the one hand, and 54,56, on the other hand, is connected through to the brake cylinders 18,20, whereas the other input is blocked. This means that in the event of damage occurring in the line system 32,42,44,46 of the front axle, the air pressure from the rear axle system is admitted to the front brake cylinder via the elements 48,50, 52,54,56 via the two-way valves 26,28.

The pressure-limiting valve 50 is set at a relatively low pressure, for example a pressure of 1 bar. In this way, normal front axle brake operation via the front compressed air line 32 is not interfered with. Only if the pressure in the front axle line system fails, as in the case in the event of a fault, is the pressure of the rear axle braking system serving in this case as a secondary braking system, transferred to the two-way valves 26,28 on the front brake cylinders 18,20. The pressure, to which the pressure-limiting valve 50 is set, is only indicated, for example, at 1 bar. In particular, the value depends on the wheelbase, the height of the centre of gravity of the vehicle and the braking equipment. Above all, it is important for the pressure to be kept sufficiently low so that during normal operation of the front axle brake circuit there is no interference with its function, including the ABS function not described here for the sake of simplicity.

Therefore, the front wheels are retarded with limited pressure and they thus assist the braking by the rear wheels. In this way, a secondary braking system can be formed, which results in an adequate retardation if the front axle brake circuit has failed.

The braking system according to the invention has been described here primarily with reference to lorries and compressed air braking systems; however, in principle it is also applicable to hydraulic braking systems and, in particular, it can also be used in delivery vans, motor cars and all types of special vehicles.

## Claims

1. A braking system for vehicles, in particular lorries, having a dual circuit service brake which comprises a front axle brake circuit and a rear axle brake circuit, **characterised in that** the rear axle brake circuit (34,36,38,40) is connected to the front axle brake cylinders (18,20) via a branch line (48) in which there is disposed a pressure-limiting valve (50).

2. A braking system according to Claim 1, **characterised in that** two-way valves (26,28) are connected upstream of the front axle brake cylinders (18,20), each of which two-way valves has an input for the front axle brake line (32,42,44,46), on the one hand, and the branch line (48,50,52,54,56) originating from the rear axle brake circuit and which are so designed that the respectively higher pressure is admitted to the'brake cylinders (28), whereas the other input is blocked.

3. A braking system according to Claim 1 or 2, **characterised in that** the pressure-limiting valve (50) is set to a maximum pressure of 1 bar.

4. A braking system according to Claim 2 or 3, **characterised in that** the two-way valves (26,28) are integrated directly into the front axle brake cylinders (18,20).
